# EUROPEAN PATENT APPLICATION

(11) **EP 2 072 354 A1**
(43) Date of publication of application: **24.06.2009**
(21) Application number: 08250720.3
(22) Date of filing: 03.03.2008
(51) Int. Cl.: B60R 25/10, B60R 25/04

(54) **Keyless alert system and method of automobiles**

(30) Priority: 21.12.2007 US 962336
(71) Applicant: Defond Components Limited, Hong Kong SAR (CN)
(72) Inventor: Chu, Wilson Wai Cheong 5th floor,, HongKong Sar (CN)
(74) Representative: Martin, David John

(57) **Abstract**

A keyless alert system (10/20) is disclosed for use in a car incorporating a keyless control system (100/200) which is formed by a master controller (100) and a remote controller (200) co-operable via an RF communication link. The keyless alert system (10/20) comprises a master alert unit (10) in the master controller (100), a remote alert unit (20) in the remote controller (200), and an alert signal generator (11/210) in each of the alert units (10 & 20) for providing an alert signal while the car engine is running and when the communication link fails by reason of the remote alert unit (20) being separated from the master alert (10) unit beyond a certain distance.

## Description

The prevent invention relates to a keyless alert system and method for automobiles.

### BACKGROUND OF INVENTION

Modern automobiles and in particular luxurious cars often incorporate a keyless entry/ignition system (or keyless control system in short), in that a master controller of the car is controlled by a remote controller, typically through a radio frequency link, to in particular unlock the doors and permit ignition of the car engine. There is no need for the remote controller to be inverted into a socket or otherwise directly connected for ignition and direct sight is relevant, so long as the remote controller is sufficiently close, in the car. The remote controller may be placed or left in a bag or pocket, and for that reason the controller may unintentionally be taken away or removed from the car while the car engine in running.

The invention seeks to mitigate or at least alleviate such a problem by providing a keyless alert system.

### SUMMARY OF THE INVENTION

According to a first aspect of the invention, there is provided a keyless alert system for use in an automobile incorporating a keyless control system having a master controller in said automobile and a remote controller co-operable with said master controller for in particular starting an engine of said automobile, the keyless alert System comprising :
a master alert unit for use in said master controller, comprising a first control circuit and a first communicating device;
a remote alert unit for use in said remote controllers, comprising a second control circuit and a second communicating device for communicating operation with the first communicating device; and
an alert signal generator in one of the master alert unit and the remote alert unit and connected to the associated control circuit of said one of the master alert unit and the remote alert unlit,
wherein the associated control circuit is adapted to activate the alert signal generator to provide an alert signal while said engine in running and when said communicating operation fails by reason of the remote alert unit being separated from the master alert unit beyond a certain distance.

Preferably, the alert signal generator is in the remote alert unit.

More preferably, the master alert unit includes an individual albert signal generator, and the first control circuit is adapted to activate the individual alert signal generator to provide an alert signal while said engine is running and when said communicating operation fails by reason of the remote alert unit being separated from the master alert unit beyond said distance.

Advantageously, the first and second communication devices are parts of said master and remote controllers respectively.

It is preferred that the alert signal generator is adapted to generate a sound alert signal.

It is preferred that the alert signal generator is adapted to generate a light alert signal.

It is preferred that the alert signal generator is adapted to dial a phone number to provide said alert signal.

It is preferred that the alert signal generator is adapted to send a text message to provide said alert signal.

Preferably, said one of the master alert unit and the remote alert unit includes a switch for disabling operation of said one of the master alert unit and the remote alert unit.

According to a first aspect of the invention, there is provided, for use in an automobile incorporating a keyless control system having a master controller in the automobile and a remote controllers co-operable with the maser controller for in particular starting an engine of the automobile, a method of alerting separation of the remote controller from the master controllers beyond a certain distance, comprising the following steps:
(a) establishing a communication link between the master and the remote controllers;
(b) starting the engine;
(c) checking the status of said communication link, any failure of which indicates that the remote controller is separated from the master alert unit beyond said distance; and
(d) providing an alert signal when said communication link fails while the engine is running.

Preferably, step (d) includes providing a signal alert generator in the remote controllers and activating the signal alert generator to provide said alert signal.

More preferably, step (d) further includes providing another signal alert generator in the master controller and activating this signal alert generator to provide said alert signal.

Advantageously, step (a) includes activating respective communication devices of the master and the remote controllers to establish said communication link

It is preferred that step (d) includes providing a sound alert signal.

It is preferred that step (d) includes providing a slight alert signal.

It is preferred that step (d) includes dialing a phone number to provide said alert signal.

It is preferred that step (4) includes sending a text message to provide said alert signal.

Preferably, step (d) includes providing a switch for disabling provision of said alert signal.

In a preferred embodiment, the method includes the following between step (c) and step (d) :
repeating step (a) and then step (c) at least once when said communication link fails while the engine is running.

### BRIEF DESCRIPTION OF DRAWINGS

The invention will now be more particularly described, by way of example only, with reference to the accompanying drawings, in which:
Figure 1 is a functional block diagram of a master controller of an automobile incorporating a master alert unit of an embodiment of a keyless entry system in accordance with the invention;
Figure 2 is a functional block diagram of a remote controller of the automobile incorporating a remote alert unit of the keyless entry system, co-operable with the master alert unit of Figure 1; and
Figure 3 in a flow chart that illustrates the operation of the master and remote alert units of Figures 1 and 2, according to an embodiment of a method of alerting separation of the remote controller from the master controllers.

### DETAILED DESCRIPTION OF PREFERRED EMBODIMENT

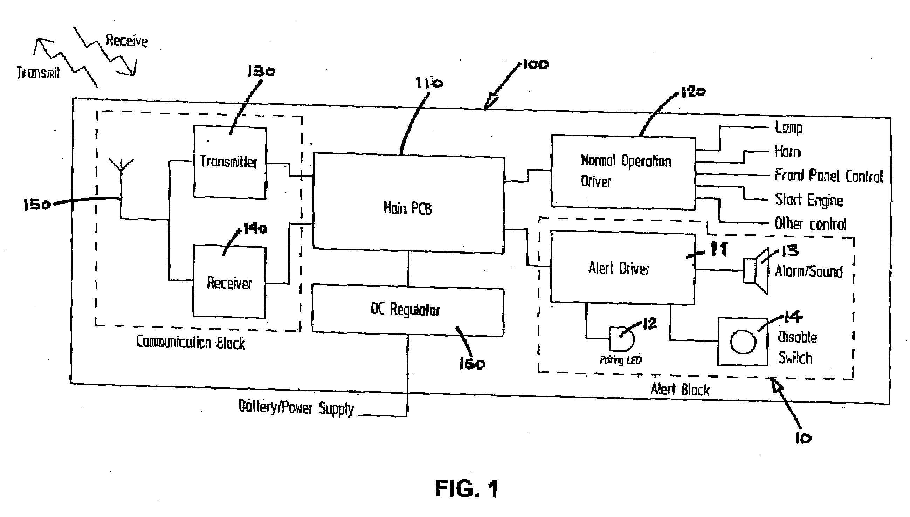

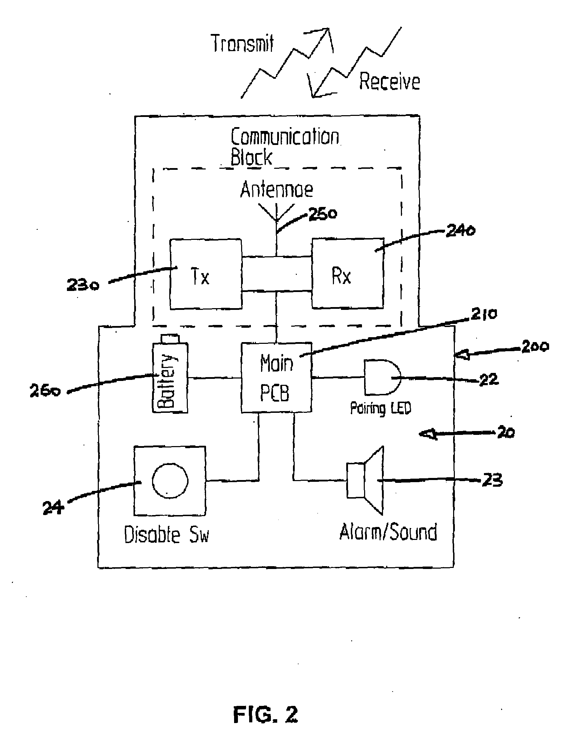

Referring initially to Figures 1 and 2 of the drawings, there is shown, a keyless alert system 10/20 embodying the invention which is integrated with a keyless control system 100/200 of an automobile such as a private car. The keyless control system 100/200 is one that has been generally known is the art, being typically formed by a master controller 100 located internally in the car usually behind the dashboard and a remote controller or key controller 200 that is usually carried by a driver for use with the master controller 100.

The master controller 100 is designer to perform certain control functions over carious parts and components of the car for normal operation of the car, such as the lamps, the horn, front panel controls and the car engine. The key controller 200 is used, in conjunction with the master controller 100 via an RF (radio frequency) wireless communication link, primarily to disable/enable a car security system (i.e. car alarm, immobilizer and wheel locks), unlock/lock the doors and ignite the car engine. Both controllers 100 and 200 are built by electronic operating circuits.

The operating circuit of the master controller 100 includes a microprocessor-based control circuit 110 on a printed circuit board (PCB) and a normal operation driver 120 connected thereto and to the lamps, hom, front panel components and a circuit associated with the car engine, etc. for performing the control functions as mentioned above, including ignition of the car engine and monitoring its status. The status of the car engine may be indicated by a pin of the microprocessor in the control circuit 110, which turns logic high to indicate that the car engine is running.

Ignition of the car engine requires presence of the key controller 200 close to the master controller 100 within the range of the RF communication link, typically up to 10 meters, before an ignition button (part of the normal operation driver 120) may be pressed to start the engine. The key controller 200 can be in the pocket of the driver or any passenger on board or indeed anywhere in the car.

For wireless communication with the key controller 200, the master controller 100 employe a pair of RF transmitter 130 and receiver 140, with an antenna 150, connected to the control circuit 110. A DC regulator 160 regulates the DC power from a battery power supply to the control circuit 110.

The operating circuit of the key controller 200 includes a microprocessor-based control circuit 210 on a printed circuit board (PCB) and a pair of RF transmitted 230 and receiver 240, with an antenna 250, connected thereto for communication with the master controller 100. A battery cell 260 is used for power supply.

The keyless alert system 10/20 comprises a master alert unit 10 and a remote alert unit 20 that are integrated with or built in the master and key controllers 100 and 200 respectively, sharing certain pre-existing resources of the keyless control system 100/200 and in particular the transmitters 130/230 and receiver 140/240.

The master and remote alert units 10 and 20 are arranged, in an alert mode, to provide an alert signal (sound or light, etc.) when the RF communication link between the master and the key controllers 100 and 200 fails, that is to say when the key controller 200 is removed from the master controller 100 (i.e. the car) beyond the communication range of 10 meters.

The master alert unit 10 is implemented by an electronic operating circuit in the form of an alert driver 11 controlling a pairing LED 12 and an alarm 13 connected thereto. A switch 14 (pushbutton or touch-sensitive)is also connected for disabling the operation of the master alert unit 10.

The alert driver 11 is wired to the control circuit 110 of the master controller 100 for control (and power). In particular, the master control circuit 110 is programmed to activate the alert driver 11 only when, and for as long as, the oar engine in in an ignited state i.e. running (i.e. when the aforesaid microprocessor pin is set to logic high).

The remote alert unit 20 is implemented by an electronic operating circuit which forms part of control circuit 210 of the key controller 200 and to which a pairing LED 22 and an alarm 23 are connected for control. The operation of the remote alert unit 20 may likewise be disabled by a switch 24.

The remote alert unit 20 operates in tandem with the master alert unit 10, and it will only be activated by its control circuit 210 when and for as long as the car engine is running, i.e. while the master alert unit 10 is in operation. This is achieved by the master control circuit 110, at the same time when it activates the alert driver 11, including a specific trigger signal in the signal of the RF communication link to trigger the remote control circuit 210 to enable the remote alert unit 20. Both of the master and remote alert units 10 and 20 will be turned off when the car engine is stopped.

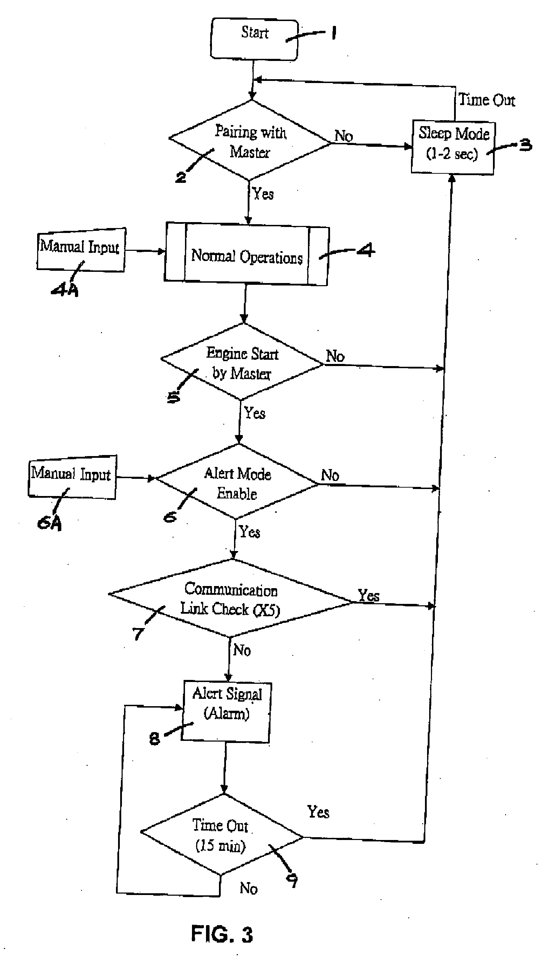

Reference is also made to the flow chart of Figure 3 of the drawings, which illustrates the operation of the master and remote alert units 10 and 20 according to a method of alerting separation of the remote controller 200 from the master controller 100 embodying the invention.

At start of operation (Block 1), a pairing operation in performed to try and establish a said RF communication link between the master and the key controllers 100 and 200 (Block 2), The communication link will be established when the key controller 200 is brought within 10 meters from the master controller 100, i.e. when a driver gets close or into the car.

Failure of the pairing Operation (prior to ignition of the car engine) indicates that the key controller 200 is far apart from the master controller 100, i.e. the car is not in use. The key controller 200 then enters a sleep mode (Block 3), and at the end of a time out period of say 1-2 seconds another pairing operation will be attempted.

Success of the pairing operation indicates that the key controller 200 is close to the master controller 100, i.e. a driver has come to the car. The normal control operation may then be performed using the master and/or key controllers 100/200 (Block 4), with manual input (Block 4A) such as pressing a button on the key controller 200 to unlock the doors.

The car engine may now be started by pressing an ignition button associated with the master controller (Block 5), or else the key controller 200 will enter the sleep mode (Block 3). Pairing operation will be attempted at the expiry of the time out period, and repeated every such period until the car engine is started.

Upon ignition or running of the car engine, the alert mode is enabled (Block 6), with manual input (Block 6A) if necessary i.e. pressing of the switches 14 and/or 24 to turn on the master and/or remote alert units 10 and/or 20. If the alert mode is not enabled, or is disabled, the key controller 200 will enter the sleep mode (Block 3). Then pairing operation will be re-attempted and repeated.

During the alert mode, the status of the communication link is checked regularly, say once every second (Block 7). If the communication link fails, the key controller 200 will enter the sleep mode (Block 3) again and pairing operation will be re-attempted. In the situation where the pairing operation fails for a prolonged period of time, say after 5 attempts or for up to about 10 seconds, this indicates that the driver (or a passenger holding the key controller 200) has left the car while the car engine is running.

In this regard, the pairing operation is repeated 5 times to eliminate the possibility that the communication link is interrupted accidentally due to other factors such as signal interference or noise.

In the case that departure of the driver is confirmed (i.e. pairing operation has failed 5 times), both the alarms 13 and 23 will be activated to provide an alert signal (Block 8) . The alert signal will continue for a predetermined period of say 15 minutes through the use of a time out loop (Block 9), and then the key controller 200 will re-enter the sleep mode (Block 3) and the operation will repeat from start as described above.

The alert signal indicates that, while the car engine is running, the driver (or a passenger holding the key controller 200), has left. This is clearly an undesirable situation as the car is left unattended and may be driven away by a theft or operated by a passenger in the car who is not licensed. In the case where a passenger holding the key controller 200 has left, the driver will need the key controller 200 back for operating the car later, such as looking the doors and activating the car security system after parking.

The alert signal serves to alert the driver to return to the car and stop the car engine and lock the doors, etc., or the passenger to return the key controller 200 to the driver.

It is envisaged that the communication link between the master and the key controllers 100 and 200 may be implemented by using the 2.4GHz band, the Bluetooth protocol or the ZigBee protocol, or any other suitable communication medium.

It is also envisaged that the alarms 13 and 23 may take the form of a bell/buzzer or light/lamp to emit an alarm sound or flashing light, or the alarm 13 in the car in particular may be provided by a room light inside the car cabin or one or more existing lights on the car body such as the indicator lights or headlights flashing to draw attention.

In an advanced embodiment, the alert driver 11 (or the equivalent part of the control circuit 210 in the key controller 200) may be configured and programmed to dial a phone number or send a text message (user presettable) to provide a mobile phone alert for the driver. Such a mobile phone alert may replace, or be added to, the aforesaid sound/light alert from the key controller 200. In response, the mobile phone may be used to do-activate the keyless alert system within a predetermined time delay, so as to turn off or stop the alert system providing an alert alarm if this is so desired.

It is noted that the keyless alert system 10/20 will not be activated until the car engine starts. Upon pairing the keyless control system 100/200 can perform the normal operations as is known in the art, and the keyless alert mode of the subject invention will only be entered after the engine ignition button has been pressed.

Since standard keyless control (entry/ignition) systems are already incorporated in some cars (and are becoming increasing popular for private cars), only slight modification in the system software is required to add the subject keyless alert system for key-removal detection. To this end, it is noted that the pairing LEDs 12 and 22 and the switches 14 and 24 are optional and can be dispensed with to minimize the introduction of the subject keyless alert system, being a value added option without much increase in the production cost.

The invention has been given by way of example only, and various other modifications of and/or alterations to the described embodiment may be made by persons skilled in the art without departing from the scope of the invention as specified in the appended claims.

## Claims

1. A keyless alert system for use in an automobile incorporating a keyless control system having a master controller in said automobile and a remote controller co-operable with said master controller for in particular starting an engine of said automobile, the keyless alert system comprising:
a master alert unit for use in said master controller, comprising a first control circuit and a first communicating device;
a remote alert unit for use in said remote controller, comprising a second control circuit and a second communicating device for communicating operation with the first communicating device; and
an alert signal generator in one of the master alert unit and the remote alert unit and connected to the associated control circuit of said one of the master alert unit and the remote alert unit;
wherein the associated control circuit is adapted to activate the alert signal generator to provide an alert signal while said engine is running and whan said communicating operation fails by reason of the remote alert unit being separated from the master alert unit beyond a certain distance.

2. The keyless alert system as claimed in claim 1,
wherein the alert signal generator is in the remote alert unit.

3. The keyless alert system as claimed in claim 2,
wherein the master alert unit includes an individual alert signal generator, and the first control circuit is adapted to activate the individual alert signal generator to provide an alert signal while said engine is running and when said communicating operation fails by reason of the remote alert unit being separated from the master alert unit beyond said distance.

4. The keyless alert system as claimed in any one of claims 1 to 3, wherein the first and second communication devices are parts of said master and remote controllers respectively.

5. The keyless alert system as claimed in any one of claims 1 to 3, wherein the alert signal generator is adapted to generate a sound alert signal.

6. The keyless alert system as claimed in any one of claims 1 to 3, wherein the alert signal generator is adapted to generate a light alert signal.

7. The keyless alert system as claimed in any one of claims 1 to 3, wherein the alert signal generator is adapted to dial a phone number to provide said alert signal.

8. The keyless alert system as claimed in any one of claims 1 to 3, wherein the alert signal generator is adapted to send a text message to provide said alert signal.

9. The keyless alert system as claimed in any one of claims 1 to 3, wherein said one of the master alert unit and the remote alert unit includes a switch for disabling operation of said one of the master alert unit and the remote alert unit.

10. For use in an automobile incorporating a keyless control system having a master controller in the automobile and a remote controller co-operable with the master controller for in particular starting an engine of the automobile, a method of alerting separation of the remote controller from the master controller beyond a certain distance, comprising the following staps:
(a) establishing a communication link between the master and the remote controllers:
(b) starting the engine;
(c) checking the status of said communication link, any failure of which indicates that the remote controller is separated from the master alert unit beyond said distance; and
(d) providing an alert signal when said communication link fails while the engine is running.

11. The method as claimed in claim 10, wherein step (d) includes providing a signal alert generator in the remote controller and activating the signal alert generator to provide said alert signal.

12. The method as claimed in claim 11, wherein step (d) further includes providing another signal alert generator in the master controller and activating this signal alert generator to provide said alert signal.

13. The method as claimed in any one of claims 10 to 12,
wherein step (a) includes activating respective communication devices of the master and the remote controllers to establish said communication link

14. The method as claimed in any one of claims 10 to 12,
wherein step (d) includes providing a sound alert signal.

15. The method as claimed in any one of claims 10 to 12,
wherein step (d) includes providing a light alert signal.

16. The method as claimed in any one of claims 10 to 12,
wherein step (d) includes dialing a phone number to provide said alert signal.

17. The method as claimed in any one of claims 10 to 12,
wherein step (d) includes sending a text message to provide said alert signal.

18. The method as claimed in any one of claims 10 to 12,
wherein step (d) includes providing a switch for disabling provision of said alert signal.

19. The method as claimed in any one of claims 10 to 12, including the following between step (c) and step (d):
repeating step (a) and then step (c) at least once when said communication link fails while the engine is running.
